(19) **Europäisches Patentamt / European Patent Office / Office européen des brevets**

(11) **EP 4 633 062 A1**

(12) **EUROPEAN PATENT APPLICATION**

(43) Date of publication:
15.10.2025 Bulletin 2025/42

(51) International Patent Classification (IPC):
H04B 10/118 (2013.01)   H04B 10/61 (2013.01)

(21) Application number: 25165760.7

(22) Date of filing: 24.03.2025

(52) Cooperative Patent Classification (CPC):
H04B 10/118; H04B 10/6165; H04B 10/6166

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 29.03.2024 US 202418621702

(71) Applicant: INTEL Corporation
Santa Clara, CA 95054 (US)

(72) Inventors:
- KRISHNAMURTHY, Sundar
  Dublin, 94568 (US)
- ZELEZNIKAR, Daniel
  Strongsville, 44136 (US)

- DASALUKUNTE, Deepak
  Beaverton, 97006 (US)
- ZHU, Jie
  San Jose, 95120 (US)
- MENDOZA, Paulino
  45066 Zapopan JAL (MX)
- O'KEEFFE, Conor
  Cork, T12 PR16 (IE)
- O'REGAN, Finbarr
  Innishannon, Cork, T12 HP9H (IE)
- KIRAC, Ahmet
  San Jose, 95136 (US)

(74) Representative: 2SPL Patentanwälte PartG mbB
Landaubogen 3
81373 München (DE)

(54) **RECONFIGURABLE ADAPTIVE EQUALIZATION AND CARRIER PHASE RECOVERY**

(57) An adaptive equalization and phase recovery circuit includes a weight adaptation circuit and a filtering circuit. The weight adaptation circuit is to decode phase estimation information generated during a carrier phase recovery for an input digital signal, generate a plurality of weights based on the phase estimation information, and perform weight adaptation to modify at least one of the plurality of weights based on a polarization of the input digital signal to obtain a modified plurality of weights. The filtering circuit is to apply the modified plurality of weights to the input digital signal to generate an equalized digital signal. The weight adaptation circuit and the filter circuit are reconfigurable for a plurality of communication standards and waveforms.

FIG. 1

**EP 4 633 062 A1**

**Description**

BACKGROUND

Coherent optical transceivers designed for terrestrial fiber optic systems cannot be used directly for optical inter-satellite links due to the unique system model of such satellite links. Receiver design in such transceivers needs to consider a different set of challenges, including but not limited to high Doppler and sampling clock offsets, along with pointing-induced fading. Adaptive equalization forms the core of such coherent optical receivers that help resolve numerous impairments, such as dispersion due to polarization modal dispersion (PMD), state of polarization (SOP) changes, and polarization-dependent loss (PDL). Further robust carrier phase recovery is necessary to remove the phase noise due to the laser linewidth of both the transmit and receive lasers. Designing a reconfigurable adaptive equalizer and phase recovery circuit is challenging when there are myriad factors affecting the receiver design, such as modulation schemes, number of polarizations, continuous or burst mode of operation, baud rates, and frame structures. High reconfigurability is essential owing to the limited size, weight, power, and cost (SWaP-C) constraints in satellite systems, which are challenging to host and power complex systems.

BRIEF DESCRIPTION OF THE DRAWINGS

In the drawings, like numerals may describe the same or similar components or features in different views. Like numerals having different letter suffixes may represent different instances of similar components. Some embodiments are illustrated by way of example, and not limitation, in the figures of the accompanying drawings in which:

FIG. 1 is a block diagram of an example receiver using the disclosed adaptive equalizer (EQ) circuit and carrier phase recovery (CPR) circuit, in accordance with some embodiments;

FIG. 2 is a block diagram of an example adaptive equalizer circuit and carrier phase recovery circuit, in accordance with some embodiments;

FIG. 3 is a block diagram of an example adaptive equalizer circuit with a 2x2 butterfly structure and decision-driven least mean square (DD-LMS) error computation, in accordance with some embodiments;

FIG. 4 is a block diagram of a weight adaptation circuit of an adaptive equalizer circuit, in accordance with some embodiments;

FIG. 5 illustrates an exemplary programmable window during which error metrics can be accumulated and used by a convergence/divergence detector of an adaptive equalizer circuit, in accordance with some embodiments;

FIG. 6 is an exemplary block diagram of a decision-directed phase recovery circuit that can be used in a carrier phase recovery circuit, in accordance with some embodiments;

FIG. 7 is an exemplary block diagram of a Viterbi Mth power phase recovery circuit, in accordance with some embodiments;

FIG. 8 is a flow diagram of an example method for signal equalization, in accordance with some embodiments; and

FIG. 9 illustrates a block diagram of an example machine upon which any one or more of the operations/techniques (e.g., methodologies) discussed herein may perform.

DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc., to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

The following description and the drawings sufficiently illustrate specific embodiments to enable those skilled in the art to practice them. Other embodiments may incorporate structural, logical, electrical, process, and other changes. Portions and features of some embodiments may be included in or substituted for those of other embodiments. Embodiments outlined in the claims encompass all available equivalents of those claims.

As used herein, the term "chip" (or die) refers to a piece of a material, such as a semiconductor material, that includes a circuit, such as an integrated circuit or a part of an integrated circuit. The term "memory IP" indicates memory intellectual property. The terms "memory IP," "memory device," "memory chip," and "memory" are interchangeable.

The term "a processor" configured to carry out specific operations includes both a single processor configured to carry out all of the operations (e.g., operations or methods disclosed herein) as well as multiple processors individually configured to carry out some or all of the operations (which may overlap) such that the combination of processors carry out all of the operations.

The disclosed techniques include a reconfigurable adaptive equalizer and carrier phase recovery circuit which can be reconfigured to support numerous modulation schemes (e.g., BPSK, QPSK, DPSK, OOK, and PPM) with support for single and dual polarization waveforms, continuous and burst mode waveforms, baud rates of 1-33 GBaud, and frame structures from different standards like terrestrial fiber optic standard OpenZR+, standard for Lunar Communication Relay Demonstration (LCRD) and standards developed by Space Development Agency (SDA) covering LEO-LEO and LEO-GEO inter-satellite links.

Terrestrial fiber optic transceivers can be designed based on the OpenZR+ standard or 400ZR standard for dual polarization signals in continuous mode with modulation schemes such as QPSK, 8PSK, and 16QAM. Baud rates are typically high, around 30 or 60 GBaud, to support data links of 100 Gbps or higher up to 800 Gbps. LCRD and SDA transceivers designed by NASA and the Space Development Agency are typically analog, with direct detection receivers covering only DPSK and OOK waveforms. Adaptive equalizer and phase recovery in OpenZR transceivers are designed only for dual polarization continuous mode waveforms catering to QPSK, 8PSK, and 16QAM modulation schemes, which are restrictive for satellite links.

Terrestrial fiber optic transceivers designed by commercial organizations based on OpenZR+ or 400ZR standards cannot be repurposed for satellite links since the channel model is significantly different. Also, there may be a limited need to support a single polarization waveform or burst mode of operation. In these designs, baud rates were fixed roughly as 30 Gbaud or 60 Gbaud to support links with data rates of 100G, 200G, or 400G. Therefore, adaptive equalizer and phase recovery circuits were fixed designs catering only to a restrictive set of requirements. Also, Doppler and sampling clock offsets were low, and any residuals could be handled after the equalizer jointly with the phase recovery.

On the other hand, LCRD and SDA transceivers designed by government entities are typically designed for DPSK waveform at 2.88 Gbaud and OOK waveform at 2.5 Gbaud, respectively. These are single polarization waveforms with a burst mode of operation in LCRD, and analog design was used to build such transceivers in the last decade by NASA and SDA. Direct detection OOK or PPM receivers were used, and adaptive equalizer or carrier phase tracking was mostly absent. Reconfigurable adaptive equalizer and phase recovery is, therefore, a unique fundamental requirement in SpaceBACN and future coherent optical modems targeted for inter-satellite links and beyond.

The disclosed techniques include reconfigurable adaptive equalizer and carrier phase recovery circuitry that can be used in a coherent optical transceiver for numerous modulation schemes such as BPSK, QPSK, DPSK, OOK, and PPM. The disclosed reconfigurable adaptive equalizer and carrier phase recovery circuitry can operate with single and dual polarization signals, continuous and burst mode waveforms, and can support various baud rates in the wide range of 1 - 33 Gbaud and numerous frame structures. This circuitry can also be robust against fading, considerable phase noise, high Doppler, and sampling clock offsets as needed in optical inter-satellite communication. This circuitry also meets low SWaP-C constraints due to the high reconfigurability, and usage can be extended for various coherent optical modem applications that meet system requirements.

Transceivers designed for Coherent optical modems used in terrestrial fiber optic systems differ significantly from those used in optical inter-satellite links (OISL). Different inter-satellite links between Low Earth orbit (LEO) and geosynchronous earth orbits (GEO) experience varying channel impairments such as Doppler, sampling clock offset, and dynamic pointing-induced fading. The relative motion of the satellites primarily impacts these, as well as the range of the link and the nature and dimensions of the optical apertures. SpaceBACN program seeks to bridge various LEO-LEO and LEO-GEO satellite constellations at different altitudes. This would be done by establishing optical inter-satellite links with a reconfigurable coherent modem design with small size, weight, power, and cost metrics (SWaP-C goals). Specifically, the disclosed techniques can be used to configure a modem capable of supporting 100 Gbps links and consuming 100 W. This would be based on a high level of reconfigurability in coherent optical transceiver circuits that can support numerous waveforms, standards, baud rates, modulation schemes, frame structures, and so on.

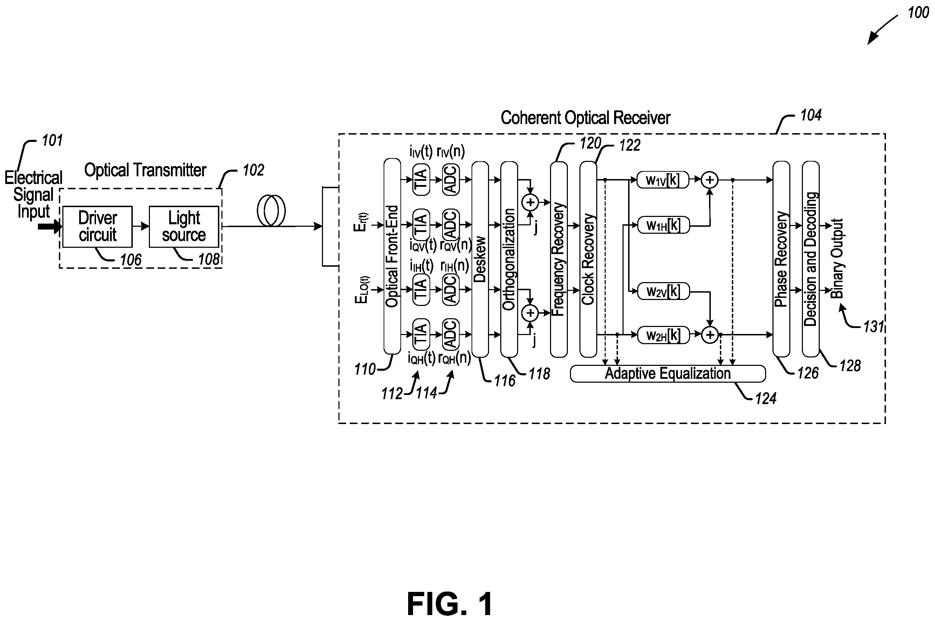

Receiver circuitry dominates the complexity of most coherent optical transceivers since various complex receiver functionalities help remove the numerous impairments in the system. FIG. 1 is a block diagram of an example receiver using the disclosed adaptive equalizer (EQ) circuit and carrier phase recovery (CPR) circuit, in accordance with some embodiments. Referring to FIG. 1, communication system 100 includes an optical transmitter 102 and an optical receiver

**EP 4 633 062 A1**

104.

The optical transmitter 102 processes an electrical signal input 101 using a driver circuit 106 and a light source 108.

The optical receiver 104 processes the received input signal to generate a binary output signal 131 using an optical front-end circuit 110, trans-impedance amplifier (TIA) circuits 112, analog-to-digital converter (ADC) circuits 114, a deskew circuit 116, an orthogonalization circuit 118, a frequency recovery circuit 120, a clock recovery circuit 122, an adaptive equalization circuit 124, a phase recovery circuit 126, and a decision and decoding circuit 128.

In some aspects, the adaptive equalization circuit 124 and the phase recovery circuit 126 can be configured based on the disclosed techniques.

In some aspects, the adaptive equalizer and carrier phase recovery are the core functionalities in the receiver circuitry that help alleviate the harmful effects of the channel. The adaptive equalizer helps in polarization demultiplexing and removing any inter-symbol interference (ISI) in the channel using a 2x2 butterfly structure in the complex domain. The effects of various impairments, such as polarization modal dispersion (PMD), state of polarization (SoP) tracking, and polarization-dependent losses (PDL), are handled by the adaptive equalizer. Chromatic dispersion does not arise in satellite links owing to the short fiber cables of <20 meters in length in the transmitter and the receiver. Hence, a static equalizer for handling chromatic dispersion is not needed, and a blind adaptive equalizer may suffice to handle the dispersion effects and polarization impairments.

Carrier phase recovery (CPR) circuits (e.g., the phase recovery circuit 126) help in improving laser linewidth tolerance by filtering and removing the phase noise. Two CPR methods that can be employed are a feedback decision-directed approach integrated with the adaptive equalizer and a feedforward Viterbi Mth power approach with phase unwrapping. Such CPR methods help remove the phase noise from laser linewidths in the transmitter and receiver lasers, which could be up to 500 kHz in each laser. Apart from lasers, these methods also help in removing phase noise from the data converters and equalizer-enhanced phase noise (EEPN). While various filtering techniques could be used, the Maximum Likelihood (ML) Wiener filter is known to be optimal for both CPR methods.

Doppler range is limited in many data centers and terrestrial fiber solutions so that simple methods can be adopted along with carrier phase recovery. However, in inter-satellite links between various LEO and GEO satellites, the range of Doppler variations can be relatively high, requiring highly efficient Doppler tracking. Hence, Doppler tracking and clock data recovery (CDR) are performed prior to the adaptive equalizer in the receiver chain. Since signals in the two polarizations are not demultiplexed before Doppler tracking and CDR, another circuit to demultiplex the polarizations is used with feedback from the adaptive equalizer. This helps improve the Doppler and CDR performance, irrespective of the state of polarization of the received signal. Pre-orthogonalization of the signals on 2 polarizations helps improve Doppler and clock recovery since they are performed before the equalizer in SpaceBACN owing to the significant Doppler.

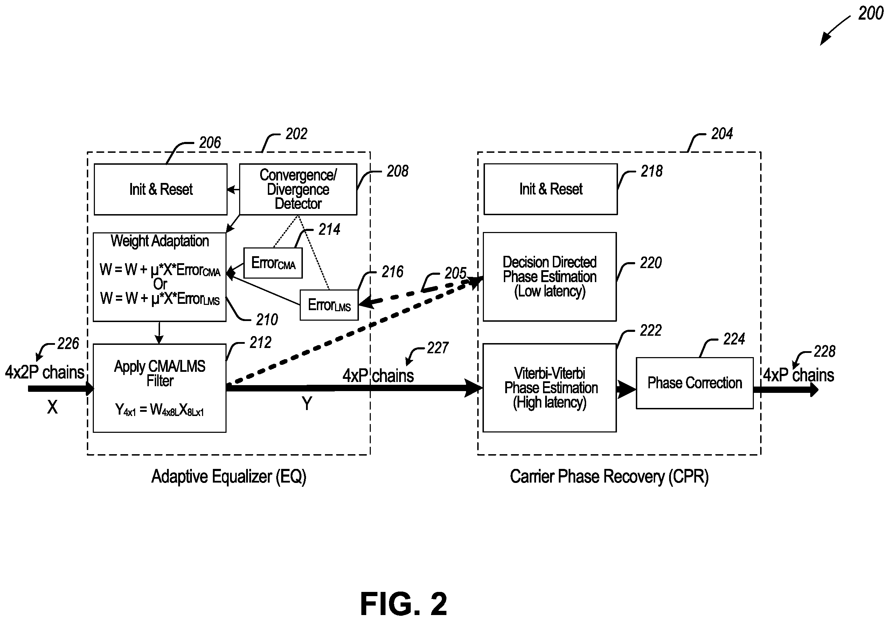

FIG. 2 is a block diagram 200 of an example adaptive equalizer (EQ) circuit 202 and carrier phase recovery (CPR) circuit 204, in accordance with some embodiments. Referring to FIG. 2, the EQ circuit 202 includes an initialization and reset circuit 206, a convergence/divergence detector circuit 208, a weight adaptation circuit 210, and a filtering circuit 212. In some aspects, the EQ circuit 202 and the CPR circuit 204 are implemented as a single adaptive equalization and phase recovery circuit.

The CPR circuit 204 includes an initialization and reset circuit 218, a low latency phase estimation circuit 220, a high latency phase estimation circuit 222, and a phase correction circuit 224.

In some aspects, the EQ circuit 202 receives an input digital signal 226 and outputs an equalized digital signal 227, which is processed by the CPR circuit 204 to generate an output signal 228.

In some aspects, the CPR circuit communicates phase estimation information 205 to the EQ circuit 202. In some aspects, the phase estimation information 205 can include error information 214 and 216, which can be used by the weight adaptation circuit 210 (e.g., during weight adaptation of one or more weights).

(A) Weight Adaptation and Filtering (e.g., functionalities of the weight adaptation circuit 210 and the filtering circuit 212).

Adaptive equalization involves filtering as a primary operation with a finite impulse response (FIR), as shown below, with real-valued operations on signals multiplexed on orthogonal polarizations. A real-valued equalizer helps in handling the delay, gain, and phase mismatches arising from the distinct front-end impairments across the 4 receive chains. Signals in 4 receive chains are denoted as follows: $X_{IV}$ and $X_{QV}$ represent the real, imaginary components of a signal in vertical polarization, while $X_{IH}$ and $X_{QH}$ represent the real, imaginary components of a signal in horizontal polarization. Since the FIR filter structure is used, L consecutive samples are chosen for each of the 4 signal components. Note that input to the adaptive equalizer can be treated as 4 receive chains or 2 orthogonal polarizations. The number of taps in the equalizer, L, could be chosen as 5 due to low dispersion in the channel. Fractional T/2 spaced equalization is performed wherein (n) is used to denote every T-spaced sample while (n+T/2) is used to denote every T-spaced sample with additional T/2 offset.

$$Y_{4x1} = W_{4x8L}X_{8Lx1} = \begin{bmatrix} w_{IV}(1) & w_{QV}(1) & w_{IH}(1) & w_{QH}(1) & \hat{w}_{IV}(1) & \hat{w}_{QV}(1) & \hat{w}_{IH}(1) & \hat{w}_{QH}(1) \\ w_{IV}(2) & w_{QV}(2) & w_{IH}(2) & w_{QH}(2) & \hat{w}_{IV}(2) & \hat{w}_{QV}(2) & \hat{w}_{IH}(2) & \hat{w}_{QH}(2) \\ w_{IV}(3) & w_{QV}(3) & w_{IH}(3) & w_{QH}(3) & \hat{w}_{IV}(3) & \hat{w}_{QV}(3) & \hat{w}_{IH}(3) & \hat{w}_{QH}(3) \\ w_{IV}(4) & w_{QV}(4) & w_{IH}(4) & w_{QH}(4) & \hat{w}_{IV}(4) & \hat{w}_{QV}(4) & \hat{w}_{IH}(4) & \hat{w}_{QH}(4) \end{bmatrix} \begin{bmatrix} X_{IV}(n) \\ X_{QV}(n) \\ X_{IH}(n) \\ X_{QH}(n) \\ X_{IV}(n+T/2) \\ X_{QV}(n+T/2) \\ X_{IH}(n+T/2) \\ X_{QH}(n+T/2) \end{bmatrix},$$

where $X_{8Lx1}$ is the received signal vector where L=5 implies a 40x1 dimensional vector; $W_{4x8L}$ is the weight matrix used in all modes of the equalizer and is of dimension 4x40 with L=5; and $Y_{4x1}$ is the output of the adaptive equalizer.

In some aspects, a weight matrix is adapted using an error signal (e.g., error information 214 or 216) based on one of two algorithms, namely, Constant Modulus Algorithm (CMA) where the constant modulus property of the modulation scheme (various Phase shift keying or PSK schemes have unit modulus) is used to deduce an error metric, and Least Mean Squares (LMS) algorithm where decision directed phase recovery helps in correcting the phase error in the received signal and subtracted from the sliced decisions to calculate the LMS error metric. In both methods, error metrics are scaled by the input signal and programmable step size to adapt the weight matrix coefficients. In some aspects, equalizer circuitry (e.g., EQ circuit 202) is configured to perform weight adaptation and filtering for single and dual polarization waveforms using the same filtering structure:

$$Y_{4x1} = W_{4x8L}X_{8Lx1} = \begin{bmatrix} w_{IV}(1) & w_{QV}(1) & w_{IH}(1) & w_{QH}(1) & \hat{w}_{IV}(1) & \hat{w}_{QV}(1) & \hat{w}_{IH}(1) & \hat{w}_{QH}(1) \\ w_{IV}(2) & w_{QV}(2) & w_{IH}(2) & w_{QH}(2) & \hat{w}_{IV}(2) & \hat{w}_{QV}(2) & \hat{w}_{IH}(2) & \hat{w}_{QH}(2) \\ 0 & 0 & 0 & 0 & 0 & 0 & 0 & 0 \\ 0 & 0 & 0 & 0 & 0 & 0 & 0 & 0 \end{bmatrix} \begin{bmatrix} X_{IV}(n) \\ X_{QV}(n) \\ X_{IH}(n) \\ X_{QH}(n) \\ X_{IV}(n+T/2) \\ X_{QV}(n+T/2) \\ X_{IH}(n+T/2) \\ X_{QH}(n+T/2) \end{bmatrix}$$

In some aspects, for the case of single polarization waveforms, the equalizer output signal could be a two-dimensional vector generated by considering two of the four weight matrix rows to be zeros, as shown above, and corresponding weight adaptation and filtering operations are avoided due to fixed zero values. Error computation in CMA and LMS modes is performed to adapt two of the four weight matrix rows.

Additionally, the output generated for single polarization waveforms could be equalized separately for two orthogonal polarizations by zeroing specific columns as shown below, along with the corresponding input signal considered:

$$Y_{4x1} = W_{4x8L}X_{8Lx1} = \begin{bmatrix} w_{IV}(1) & w_{QV}(1) & 0 & 0 & \hat{w}_{IV}(1) & \hat{w}_{QV}(1) & 0 & 0 \\ w_{IV}(2) & w_{QV}(2) & 0 & 0 & \hat{w}_{IV}(2) & \hat{w}_{QV}(2) & 0 & 0 \\ 0 & 0 & 0 & 0 & 0 & 0 & 0 & 0 \\ 0 & 0 & 0 & 0 & 0 & 0 & 0 & 0 \end{bmatrix} \begin{bmatrix} X_{IV}(n) \\ X_{QV}(n) \\ 0 \\ 0 \\ X_{IV}(n+T/2) \\ X_{QV}(n+T/2) \\ 0 \\ 0 \end{bmatrix}$$

In some aspects, this equalization structure can be used separately from the vertical and horizontal polarizations that enable canceling only the inter-symbol interference and do not perform any polarization demultiplexing. When the polarization modal dispersion is low compared to the symbol period, such equalization techniques could be applied as in the case of SDA standard with low baud rates between 1 - 10 Gbaud with symbol period of 100ps - 1ns while polarization modal dispersion « 10ps.

In some aspects, the adaptive equalizer circuitry is gated periodically based on a programmable period or number of clock cycles using a known frame boundary and burst length. This enables support of burst mode waveforms like Laser Communications Relay Demonstration (LCRD) differential phase shift keying (DPSK) burst modes with different burst dead time factors like D=0, 1, 3, 7, 23, 39. Here, D=0 refers to a continuous mode waveform, and D=1 refers to a 50% duty cycle with 176-bit bursts, D=3 refers to a 25% duty cycle with 1 data burst followed by 3 bursts with no transmission. For example, 16 samples were processed in each clock cycle, and 176 bits corresponded to 11 clock cycles, denoting a burst. In this scenario, equalizer circuitry is gated on for 11 clock cycles and gated off for the subsequent 11 clock cycles to support burst mode operation. To facilitate this, the frame boundary is deduced by the deframer circuitry and fed back to the receiver circuitry in the DSP, and burst duration is used to calculate the start and end of every data burst and dead times in between. In case burst duration samples are not an integer multiple of samples per clock cycle, additional gating is performed in the starting and ending clock cycles to account for the fractional part of the burst duration gated. Owing to the programmable nature of this gating functionality, different burst and dead time durations can be supported easily. This gating functionality can be used in the adaptive equalizer since dead time (no transmission) is carrying noise from the channel, and the receiver front-end, which can make the equalizer diverge due to improper error computation either in CMA or LMS mode of operation. Burst mode waveform support is fundamental to supporting LCRD waveforms developed by NASA and provisioned in the SpaceBACN system requirements. Commercial coherent transceivers do not provide such gating functionality for supporting burst mode waveforms, and this is fundamental to SpaceBACN program requirements. Numerous frame structures in continuous mode can use the default mode of operation (OpenZR or SDA), while LCRD frame structures in continuous or burst mode would use this gating functionality.

While the default mode of the adaptive equalizer has real-valued coefficients, equivalent representation could be used with complex-valued coefficients, which enables the 2x2 Jones matrix structure to decouple the signals on the two polarizations. Using real-valued coefficients leads to the equivalent 4x4 real-valued matrix to represent the polarization modal coupling and perform equalization, which is adopted in the default mode for robustness to front-end impairments.

While the equalizer uses a 4x40 weight matrix to demultiplex the signals on 2 polarizations with L=5 taps as default, the first and last tap could be made zeros to operate in L=3 mode with 4x24 sub-matrix with non-zero entries while retaining the original structure.

In some aspects, the received signal is subsampled based on the baud rates and waveform used, which enables the complexity of the equalizer to be controlled while meeting the polarization tracking performance. For example, P=24 could be the number of parallel chains at the output of the adaptive equalizer. However, the error computation could use a smaller subset of N=6, 8, or 12 samples in every clock cycle to calculate the error metric and adapt the weight matrix. Maximum baud rate helps decide the number of parallel chains, and reducing the baud rate implies signals in certain chains are forced to be zeros. This allows high reconfigurability to support numerous baud rates while maintaining tracking performance of the state of polarization (SoP). To support numerous baud rates, the clock rate could be adjusted between 1 - 1.5 GHz, and the parallelism factor could be modified as P = 24, 12, 6, 8, 4, 2, and subsampling provides a method to tradeoff power and tracking the performance of SoP.

The equalizer is initialized in unsupervised CMA mode wherein the constant modulus property of the modulation scheme is exploited for schemes such as BPSK, QPSK, and DPSK. For OOK and PPM modulation schemes, DC offset is calculated and removed using an adaptive threshold based on the M-PPM order. Subsequently, the constant modulus algorithm (CMA) could be applied for OOK and PPM signals as well based on the following equations:

$$e_{CMA,1}[k] = (R_d - |y_1[k]|^2) \, y_1[k]$$

$$e_{CMA,2}[k] = (R_d - |y_2[k]|^2) \, y_2[k].$$

Error computation during the initial CMA mode of operation is shown above, with modulus $R_d$ being chosen as 1 for BPSK, QPSK, and DPSK. The output of the equalizer is denoted here as $y_1[k]$ and $y_2[k]$ for the two orthogonal polarizations.

Weight adaptation in the CMA mode of operation can then be denoted using the below set of equations:

$$w_{IV}[n + K] = w_{IV}[n] + \mu \, X_V[n] \, (R_d - |y_1[n]|^2) \, y_1^*[n]$$

$$w_{QV}[n + K] = w_{QV}[n] + \mu \, X_V[n] \, (R_d - |y_1[n]|^2) \, y_1^*[n]$$

$$*$$

$$*$$

$$\widehat{w}_{IH}[n + K] = \widehat{w}_{IH}[n] + \mu \, X_H[n] \, (R_d - |y_2[n]|^2) \, y_2^*[n]$$

$$\widehat{w}_{QH}[n + K] = \widehat{w}_{QH}[n] + \mu \, X_H[n] \, (R_d - |y_2[n]|^2) \, y_2^*[n].$$

In the case of phase shift keying (PSK) schemes, the decision-directed LMS (DD-LMS) algorithm helps in calculating a coarse phase error per symbol, which can be corrected and subtracted from the sliced decisions to compute the error metric for adapting the equalizer. Error computation is shown below for the DD-LMS mode of operation of the equalizer using the following equations:

$$e_{LMS,1}[k] = e^{j\,\widehat{\theta_1}[k]}\left(\widehat{s_1}[k] - y_1[k]\,e^{-j\,\widehat{\theta_1}[k]}\right)$$

$$e_{LMS,2}[k] = e^{j\,\widehat{\theta_2}[k]}\left(\widehat{s_2}[k] - y_2[k]\,e^{-j\,\widehat{\theta_2}[k]}\right).$$

where the equalizer output signal is denoted as $y_1[k]$ and $y_2[k]$ for the two orthogonal polarizations; $s_1[k]$, $s_2[k]$ are the corresponding sliced decisions of the equalizer output; and $\theta_1[k]$, $\theta_2[k]$ are the phase error estimates from the decision directed phase recovery method.

Phase error estimates could involve a simple averaging of 16 past phase values, as the mean operation could be simpler circuitry with low latency.

Below is the set of equations denoting the weight adaptation in the DD-LMS mode of operation:

$$w_{IV}[n + K] = w_{IV}[n] + \mu\,X_V[n]\,[\,e^{j\,\widehat{\theta_1}[k]}\,(\widehat{s_1}[k] - y_1[k]\,e^{-j\,\widehat{\theta_1}[k]})\,]^*$$

$$w_{QV}[n + K] = w_{QV}[n] + \mu\,X_V[n]\,[\,e^{j\,\widehat{\theta_2}[k]}\,(\widehat{s_2}[k] - y_2[k]\,e^{-j\,\widehat{\theta_2}[k]})\,]^*$$

$$*$$

$$*$$

$$w_{IH}[n + K] = w_{IH}[n] + \mu\,X_H[n]\,[\,e^{j\,\widehat{\theta_1}[k]}\,(\widehat{s_1}[k] - y_1[k]\,e^{-j\,\widehat{\theta_1}[k]})\,]^*$$

$$w_{QH}[n + K] = w_{QH}[n] + \mu\,X_H[n]\,[\,e^{j\,\widehat{\theta_2}[k]}\,(\widehat{s_2}[k] - y_2[k]\,e^{-j\,\widehat{\theta_2}[k]})\,]^*,$$

where $w$ denotes the entries of the 4x40 weight matrix, $x$ denotes the equalizer input on two polarizations, and $\mu$ is the equalizer step size chosen to control the rate of convergence. Step size could be adapted based on the operating baud rate and enable adequate tracking of the polarization states for various standards and waveforms.

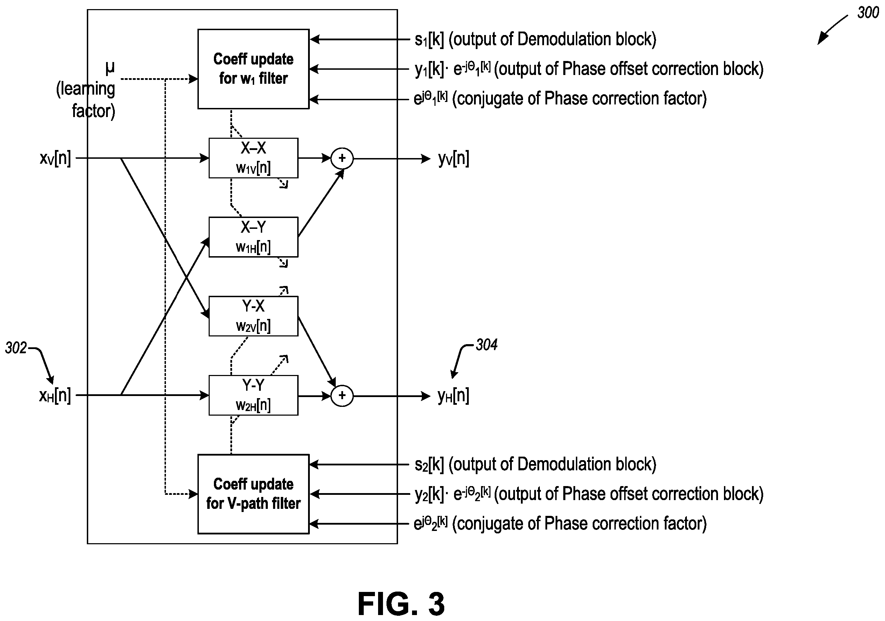

FIG. 3 is a block diagram of an example adaptive equalizer circuit 300 with a 2x2 butterfly structure and decision-driven least mean square (DD-LMS) error computation, in accordance with some embodiments. The adaptive equalizer circuit 300 can be used to process input signal 302 and generate equalized digital signal 304.

Initially, the CMA algorithm, which relies on the constant modulus nature of the symbol constellation, can be used. Phase recovery would not work well until the gradient descent part of the equalizer has converged to obtain the optimal weights. Hence, the CMA technique is applied till the convergence of the equalizer. However, after the convergence, reliable phase estimates are available from the decision-directed phase recovery. Hence, the equalizer can be switched to the decision-directed mode of operation by employing DD-LMS updates.

Once the adaptive equalizer has converged, it would be able to remove the deleterious effects of polarization modal dispersion (PMD), state of polarization (SOP) changes, and polarization-dependent loss (PDL). Since the number of equalizer taps used is chosen as L=5, substantially extensive PMD in the orders of several tens of picoseconds could be handled. Polarization modal coupling would be removed as part of the 2x2 Jones matrix butterfly structure or equivalent 4x4 real-valued structure. State of polarization (SoP) changes are then tracked up to 50 krad/s with appropriate equalizer step size. Still, it can be noted that in inter-satellite channels with two 20m cables, nominal SoP changes are expected to be below 10 krad/s.

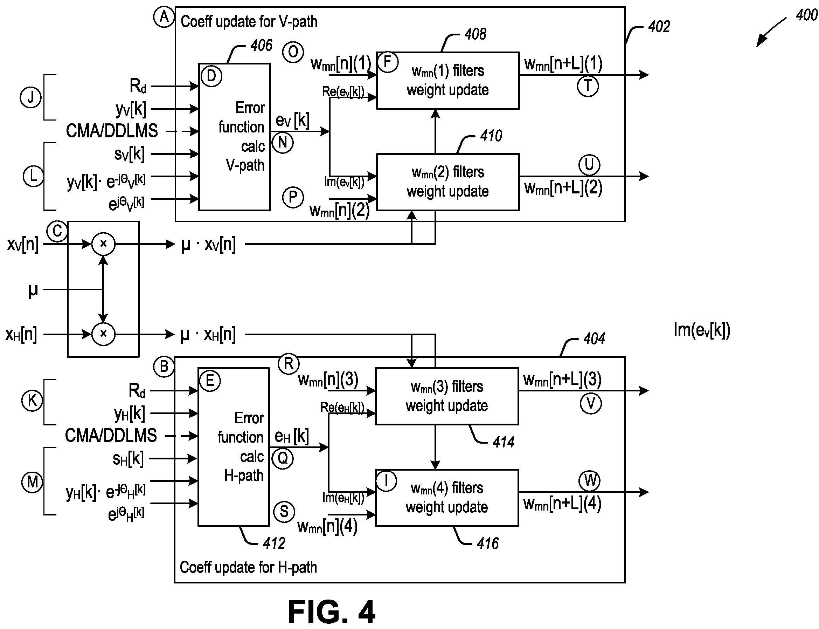

Weight adaptation circuitry using two sub-filters for the vertical (V) and horizontal (H) paths denoting the two polarizations is illustrated in FIG. 4. FIG. 4 is a block diagram of a weight adaptation circuit 400 of an adaptive equalizer circuit, in accordance with some embodiments. The weight adaptation circuit 400 can include circuit 402 for a coefficient update for the V-path and circuit 404 for a coefficient update for the H-path. Circuit 402 also includes error function calculation circuit 406 for V-path and weight update circuits 408 and 410. Circuit 404 includes error function calculation circuit 412 for H-path and weight update circuits 414 and 416.

It can be noted that the circuitries calculating the error function take numerous inputs, and a flag to configure CMA or LMS mode is used to calculate the error function. Subsequently, the weight adaptation step involves scaling the error function by the step size and the input signal and later updating the previous weight coefficients used. In the case of single polarization waveforms, two of the 4 weight updates would be performed. In the case of burst mode waveforms, error metric calculation and weight update would be avoided for the configured number of samples or clock cycles.

(B) Equalizer Control (e.g., functionalities of the initialization and reset circuit 206).

Adaptive equalizers in coherent optical receivers can include a control circuit that performs functions for initialization and reset procedures to maintain performance.

The CMA algorithm is more straightforward to implement and can be more efficient than DD-LMS in terms of handling phase noise. However, it can cause a singularity issue, which implies that both orthogonal polarizations are adapted to the same source, causing the Jones matrix to become singular. This is harmful for polarization demultiplexing, and so, in another aspect of the invention, a unitary matrix constraint is enforced to ensure convergence of the equalizer. This relies on the fact that the channel transfer function of the fiber has a unitary structure when group delays are the primary impairment sources. This is performed by retaining the diagonal elements and modifying the off-diagonal elements of the 2x2 Jones matrix or equivalent 4x4 real-valued matrix after averaging with conjugate symmetric values. In some aspects, this processing can be performed based on a programmable periodicity or if the determinant of the Jones matrix approaches zero or based on the detection of divergence of the equalizer using error metrics. Enforcing this unitary matrix constraint could also be a multi-stage procedure wherein the first stage involves unitary matrix changes, and the second stage comprises orthogonalizing the dual polarization signals. Polarization Dependent Loss (PDL) of 1.5 to 2 dB can be handled once the equalizer has converged. The periodicity of unitary matrix constraint is used to control maximum PDL supported while enabling fast convergence.

In some aspects, past center taps from the equalizer weight matrix are deduced to form a Jones matrix for polarization decoupling by measuring the power in all taps and choosing the strongest. The equivalent 4x4 matrix can be used to decouple the polarizations or orthogonalize the signals on 2 polarizations and is therefore used prior to Doppler tracking and CDR. This improves the performance of Doppler tracking and CDR circuits since the signals in the two polarizations are better orthogonalized. Such a polarization decoupling step could also be performed using a fixed set of 4x4 coefficients that are calibrated using a DSP processor initially or in a periodic manner.

In an aspect of the invention, to improve the convergence of the equalizer, the additional transformation could be applied to the 4x4 polarization decoupling matrix. Rotating the signal using a digital quarter wave plate (4x4 matrix) allows the principal state of polarization to be modified from linear basis vectors to circular basis vectors and vice versa. This could be performed using a measure of the degree of polarization and a lookup table in the DSP processor for different fast axis angles. Jones vector or Stokes parameters could be used in this regard. This enables seamless convergence for all possible states of polarization covering linear, circular, and elliptical polarizations.

Digital quarter-wave plates are more straightforward to implement in this scenario as they involve only adders and are multiplier-free. Below is a 4x4 matrix representing the digital quarter wave plate, and it involves only 4 adders for each element of the 4x1 vector:

$$[1 \ \ 0 \ \ 0 \ \ 1;$$
$$0 \ \ 1 \ {-1} \ \ 0;$$
$$0 \ \ 1 \ \ 1 \ \ 0;$$
$${-1} \ \ 0 \ \ 0 \ \ 1].$$

Applying this to the polarization decoupling matrix helps in handling all possible incident angles with respect to the principal states of polarization.

(C) Convergence and Divergence Detector (e.g., functionalities performed by the convergence/divergence detector circuit 208).

In some aspects, equalizer convergence and divergence are detected using error metrics accumulated over a programmable window. Suitable thresholds and controls are used to switch back and forth between the CMA and LMS modes of operation in the equalizer.

A switch may also be used to detect convergence using accumulated error metrics over a programmable window to enter the LMS mode of the equalizer.

A switch is used to detect divergence using accumulated error metrics over a programmable window to switch back to the CMA mode of the equalizer.

This convergence and divergence detector could be enabled periodically to ensure robust performance while maintaining low complexity. For example, errors computed over the last 64 or 128 clock cycles could be accumulated and used to detect convergence or divergence.

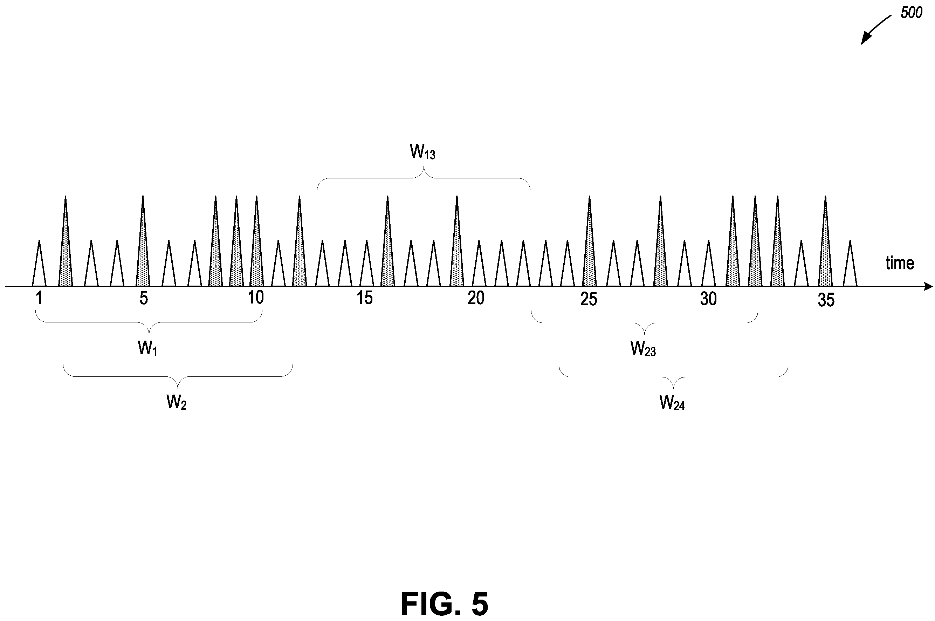

FIG. 5 illustrates an exemplary programmable window 500 during which error metrics can be accumulated and used by a convergence/divergence detector of an adaptive equalizer circuit, in accordance with some embodiments. More specifically, FIG. 5 depicts the programmable window during which error metrics are accumulated and compared with appropriate thresholds to switch between CMA and LMS modes. In the case of the CMA mode of operation, when accumulated error metrics reduce below a certain programmable threshold (denoting convergence), the algorithm is switched to the LMS mode of operation. In the LMS mode of operation, when accumulated error metrics increase above a certain programmable threshold (denoting divergence), the algorithm is switched back to the CMA mode of operation.

(D) Carrier Phase Recovery (e.g., functionalities performed by the CPR circuit 204).

In some aspects, carrier phase recovery circuits used in coherent optical transceivers can assist with estimating and removing phase noise primarily arising due to line widths of the transmitter and receiver lasers. Phase noise is a correlated Wiener stochastic process, typically referred to as a random walk like in a Markov process where values depend on previous phase noise. It is of the following form:

$$\theta[k] = \theta[k-1] + \Delta\theta[k],$$

where $\Delta\theta$ is a zero mean Gaussian variable with variance, $\sigma^2_{\Delta\theta} = 2\pi\Delta v T_s$ and $\Delta v$ is the sum of the transmitter and the receiver laser linewidths, which can be approximately 400 kHz maximum (300 kHz from the transmitter and 100 kHz from the receiver). Since phase noise variance is proportional to $T_s$, phase noise is more harmful in standards with low symbol rates, like LCRD and SDA.

In addition to laser line widths, Amplified Spontaneous Noise (ASE) and nonlinearities in the front end can also contribute to additional phase noise. Hence, the total phase noise bandwidth can be considered to be 100 kHz + 300 kHz + ~100 kHz = ~ 500 kHz. Due to the correlated nature of the phase noise, phase noise estimates corresponding to the previous samples can be filtered to produce a reasonably accurate estimate of the phase noise for the current sample. Considerable filter lengths contribute to significant latency and complexity, while smaller lengths yield inaccurate phase estimates.

In some aspects, two-stage carrier phase recovery is performed where the first feedback decision-directed stage is integrated with the equalizer as DD-LMS mode with filtering based on a simple mean calculation, and the second stage involves a feed-forward Viterbi Mth power algorithm with phase unwrapping. Both stages of phase recovery are made reconfigurable to support numerous modulation schemes such as BPSK, QPSK, DPSK, OOK, and PPM.

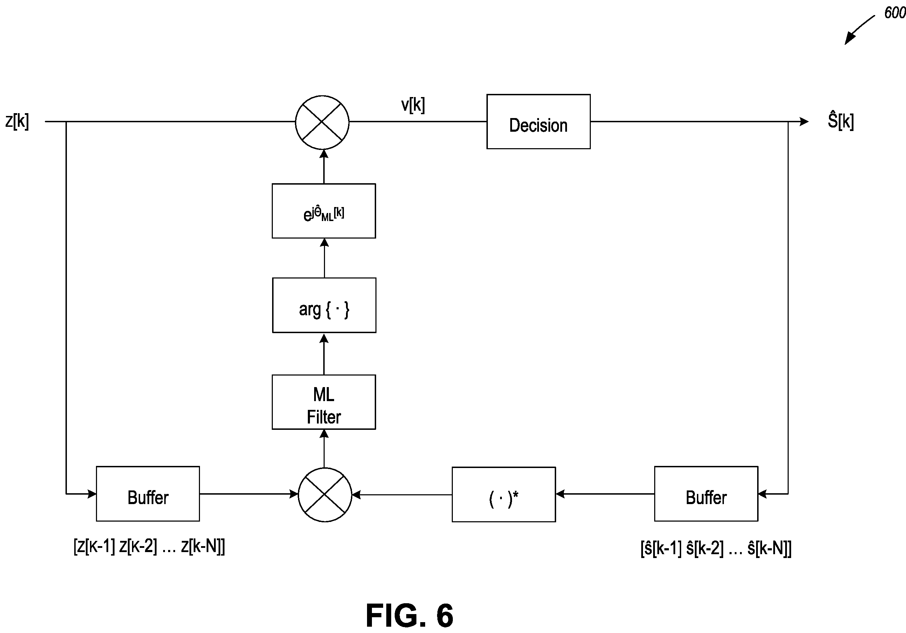

The first stage of decision phase recovery with mean calculation is more straightforward to implement, with either polar or cartesian domain operations. This feeds the LMS mode error calculation within the adaptive equalizer. FIG. 6 illustrates the decision-directed phase recovery approach. FIG. 6 is an exemplary block diagram 600 of a decision-directed phase recovery circuit that can be used in a carrier phase recovery circuit, in accordance with some embodiments.

Samples are buffered for past N samples and multiplied with the conjugate of the sliced decisions buffered to match the latency. While a maximum likelihood (ML) filter could be optimal in terms of performance, an averaging or mean filter is more straightforward to implement. The angle of the resulting phase terms helps in deducing the phase noise estimate, which is then used to correct the received signal in a feedback manner. In some aspects, additional latency could be involved due to the DD-LMS adaptation, which needs to be matched to the feedback path.

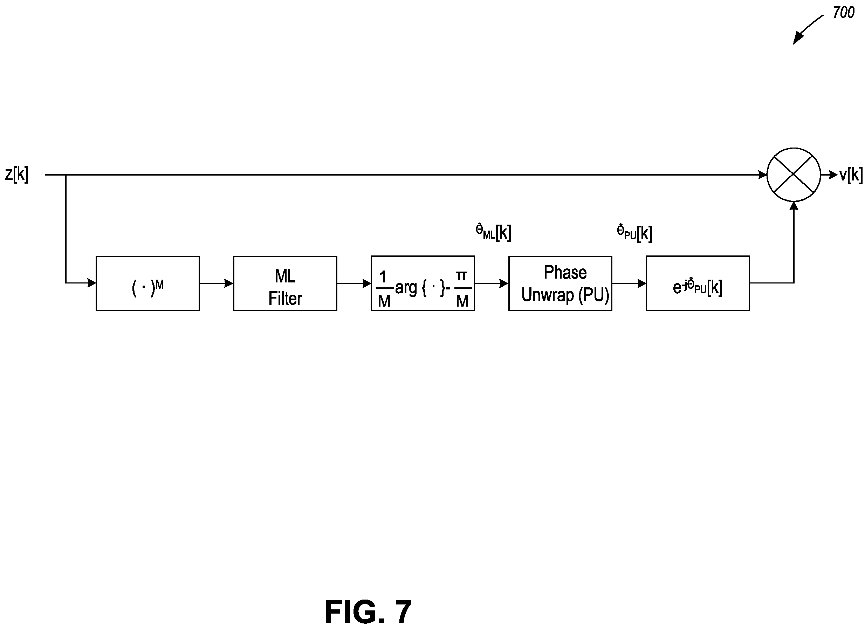

The Viterbi Mth power approach is illustrated in FIG. 7, which involves a Mth power operation, a Maximum Likelihood (ML) filter for averaging against noise, phase calculation, and phase unwrapping. FIG. 7 is an exemplary block diagram 700 of a Viterbi Mth power circuit that can be used in a carrier phase recovery circuit, in accordance with some embodiments;

Performing Mth power within the Viterbi CPR circuitry helps remove the data modulation phase and helps calculate the phase noise efficiently. With the Viterbi approach, Mth power could be designed with lookup tables (LUT) and shift-add circuits, and phase unwrapping is performed with a chain of partial adder circuits. First, Mth power is performed on the signal to remove the modulation phase. QPSK involves the 4th power of the signal, while DPSK and BPSK involve the 2nd power of the signal. Power 4 of a complex signal 'a+jb' is determined using the following equation: $(a+jb)^4 = (a^4 +b^4-6a^2b^2) + j[4ab(a^2-b^2)]$.

As shown above, 4th power of a complex signal involves the calculation of the real and imaginary components. Power-4 and Power-2 terms such as $a^4$, $b^4$, $a^2$, and $b^2$ can be implemented using two lookup tables. Then, the real part can be calculated using 4 LUT lookups, 1 multiply, and 2 additions, while the imaginary part can be calculated using 2 LUT lookups, 2 multiplies, and 1 addition. Similarly, Power-2 operations for DPSK or BPSK involve just 2 LUT lookups, 1 multiply, and 1 addition. Also, Power-4 of the signal could be calculated recursively using Power-2 operations.

In some aspects, a Maximum Likelihood (ML) filter is used to filter in the Viterbi approach, and a non-causal Wiener filter is typically used that can adapt to Optical SNR, phase noise, baud rate, and modulation scheme. For SpaceBACN, this is quantized to a representation that is similar to the nearest canonical signed digit (CSD). A linear polynomial enabling shift add circuits is designed for this purpose to avoid any multipliers. Below is the representation of each of the 24 coefficients using a 2-stage CSD approximation (Canonical Signed digit). This design does not involve any multipliers for the ML filter and can be simplified using 2 shifts and 2 adds. Although there are 49 taps in total, the center tap is always 1, and the filter is symmetric. Hence, only 24 coefficients are necessary to be stored, as follows:

$$Coeff[n] = Const1v0[n] + \frac{Sign1[n]}{2^{Shift1[n]}} + \frac{Sign2[n]}{2^{Shift2[n]}} \qquad n \in \{1,2,\dots 24\}.$$

With the above approximation, ML filtering for one tap is equivalent to the following equation:

$$\text{Coeff}[n]*Y[n] = \text{Const1v0}[n].Y[n] + \text{Sign1}[n]\ Y[n]>>\text{Shift1}[n] + \text{Sign2}[n]\ Y[n]>>\text{Shift2}[n].$$

In some aspects, *Sign*1[*n*] and *Sign*2[*n*] can only be either +1 or -1, and can be stored in single bit. *Shift*1[*n*] and *Shift*2[*n*] can take values between 0 to 7 (stored using 3 bits each). *Const*1*v*0[*n*] takes a value of either 0 or 1 and can be stored using 1 bit. In total, each coefficient can be represented in this CSD format using 2+6+1 = 9 bits. Hence, 24x9 bits are used to represent each 49-tap ML filter. Further, since numerous filters can be configured based on phase noise and OSNR, they can be pre-calculated as 24x9x12 bits and configuration registers modified by a DSP processor. Fluctuations in the filtered OSNR, as observed in the modem, can be used to switch between different ML filter configurations. In an aspect of the invention, single Viterbi CPR circuitry can be programmed to operate at numerous baud rates, modulation schemes, optical SNR, and phase noise by adjusting the ML filter coefficients from the DSP processor.

In some aspects, carrier phase recovery for OOK and PPM modulation schemes used in the SDA standard can be performed individually on both polarizations, and the signal is combined later since only amplitude is used for the decisions. This could be with or without the presence of an adaptive equalizer before the phase recovery. When an equalizer is not present, polyphase selection is performed to choose T/2 spacing to maximize the energy. The combination of signals after phase recovery could be performed whenever channel-induced dispersion is relatively small compared to the symbol period. Since baud rates envisioned for this standard are between 1-10 Gbaud with a significant symbol period of 100ps - 1ns, this would be feasible.

The calculated phase is then unwrapped to be any value (i.e., [-∞ : ∞]) since Power-M operation would have wrapped the phase estimates depending upon the factor M between [-π/M : π/M], based on the following equation:

$$PU(\cdot) = (\cdot) + \left( \left\lfloor \frac{1}{2} + \frac{\hat{\theta}_{k-1} - (\cdot)}{2\pi/M} \right\rfloor \right) \frac{2\pi}{M}$$

Phase unwrapping may include the above operation on the calculated phase angle denoted using a dotted operand in braces. In some aspects, for QPSK with M=4, this is equivalent to a modulo π/2, and for BPSK or DPSK with M=2, it would be equivalent to a modulo π operation. This is performed in a reconfigurable manner for all supported modulation schemes such as BPSK, QPSK, and DPSK.

In some aspects, the following recursive equation can be performed for phase unwrapping of the Viterbi approach:

$$\theta_p(K) = \sum_{k=1}^{K} \left( \left\lfloor \frac{1}{2} + \frac{\theta_M(k-1) - \theta_M(k)}{\pi/2} \right\rfloor \frac{\pi}{2} \right) + \theta_M(K) \ \text{ with } \ \theta_M(0) = \theta_p(0)$$

In some aspects, this process includes the calculation of phase differences modulo pi/2, round, and summation. The summation does not involve any data dependency and can, therefore, be efficiently parallelized in the hardware implementation.

In some aspects, the disclosed techniques enable high reconfigurability while also allowing a low-complexity design of adaptive equalizer and phase recovery that is well suited for the DARPA SpaceBACN program and beyond.

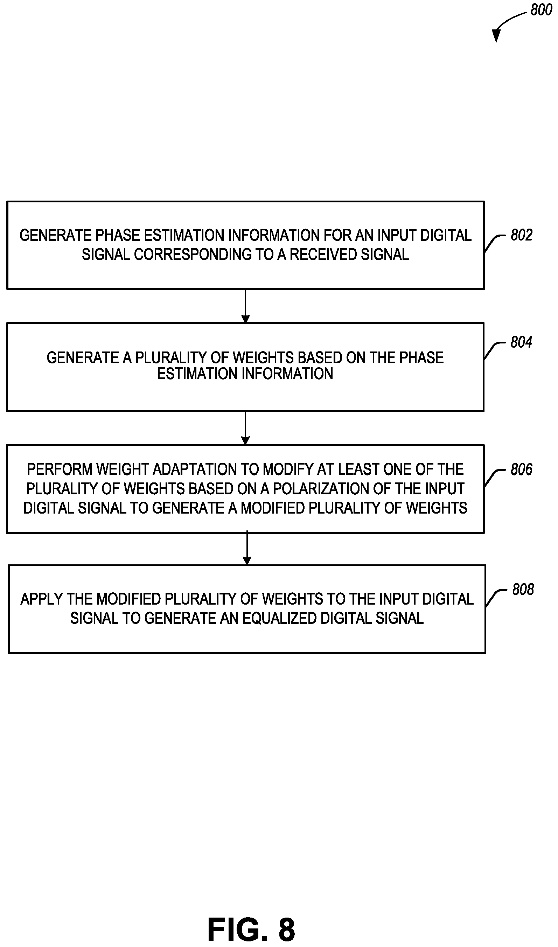

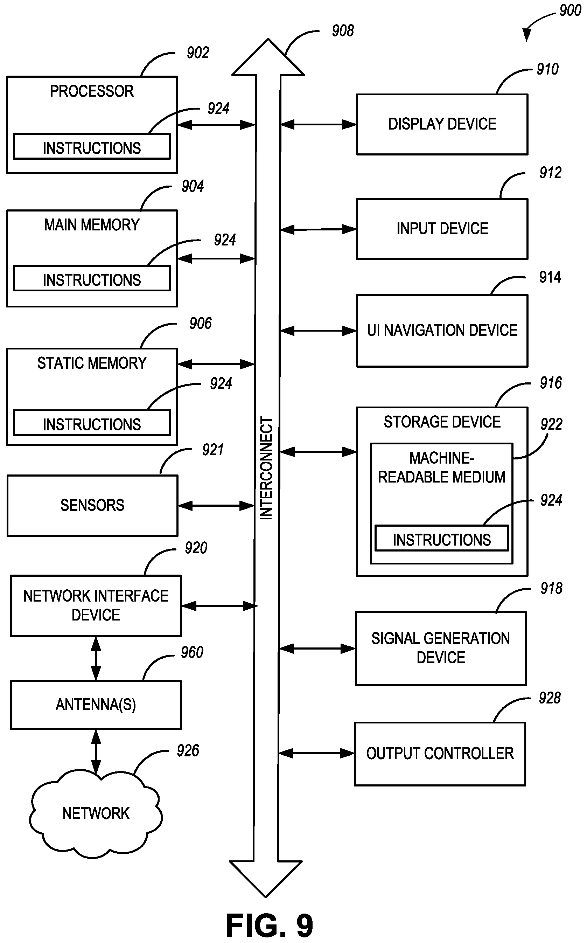

FIG. 8 is a flow diagram of an example method 800 for signal equalization, in accordance with some embodiments. Referring to FIG. 8, method 800 includes operations 802, 804, 806, and 808, which may be executed by a receiver, a transmitter, a transceiver, an embedded controller, or another processor of a computing device (e.g., hardware processor 902 of machine 900 illustrated in FIG. 9, which can include one or more of the circuits discussed in connection with FIGS. 1-7). In some embodiments, one or more of the circuits discussed in connection with FIGS. 1-7 can perform the functionalities listed in FIG. 8, as well as in the examples listed below.

The following example operations can be configured based on the description of FIG. 1 and FIG. 2.

At operation 802, phase estimation information (e.g., phase estimation information 205) for an input digital signal corresponding to a received signal is generated (e.g., by the CPR circuit 204).

At operation 804, a plurality of weights is generated (e.g., by the weight adaptation circuit 210) based on the phase estimation information.

At operation 806, weight adaptation is performed (e.g., by the weight adaptation circuit 210) to modify at least one of the plurality of weights based on a polarization of the input digital signal to generate a modified plurality of weights.

At operation 808, the modified plurality of weights is applied to the input digital signal (e.g., by the filtering circuit 212) to generate an equalized digital signal.

FIG. 9 illustrates a block diagram of an example machine 900 upon which any one or more of the techniques (e.g., methodologies) discussed herein may perform. In alternative embodiments, the machine 900 may operate as a standalone device or may be connected (e.g., networked) to other machines. In a networked deployment, machine 900 may operate in the capacity of a server machine, a client machine, or both in server-client network environments. In an example, machine 900 may function as a peer machine in a peer-to-peer (P2P) (or other distributed) network environment. The machine 900 may be a personal computer (PC), a tablet PC, a set-top box (STB), a personal digital assistant (PDA), a portable communications device, a mobile telephone, a smartphone, a web appliance, a network router, switch or bridge, or any other computing device capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. The terms "machine," "computing device," and "computer system" are used interchangeably.

Machine (e.g., computer system) 900 may include a hardware processor 902 (e.g., a central processing unit (CPU), a graphics processing unit (GPU), a hardware processor core, or any combination thereof), a main memory 904, and a static memory 906, some or all of which may communicate with each other via an interlink (e.g., bus) 908. In some aspects, the main memory 904, the static memory 906, or any other type of memory (including cache memory) used by machine 900 can be configured based on the disclosed techniques or can implement the disclosed memory devices.

Specific examples of main memory 904 include Random Access Memory (RAM) and semiconductor memory devices, which may include, in some embodiments, storage locations in semiconductors such as registers. Specific examples of static memory 906 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

Machine 900 may further include a display device 910, an input device 912 (e.g., a keyboard), and a user interface (UI) navigation device 914 (e.g., a mouse). In an example, the display device 910, the input device 912, and the UI navigation device 914 may be a touchscreen display. The machine 900 may additionally include a storage device (e.g., drive unit or another mass storage device) 916, a signal generation device 918 (e.g., a speaker), a network interface device 920, and one or more sensors 921, such as a global positioning system (GPS) sensor, compass, accelerometer, or other sensors. The machine 900 may include an output controller 928, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.). In some embodiments, the hardware processor 902 and/or instructions 924 may comprise processing circuitry and/or transceiver circuitry.

The storage device 916 may include a machine-readable medium 922 on which one or more sets of data structures or instructions 924 (e.g., software) embodying or utilized by any one or more of the techniques or functions described herein can be stored. Instructions 924 may also reside, completely or at least partially, within the main memory 904, within static memory 906, or the hardware processor 902 during execution thereof by the machine 900. In an example, one or any combination of the hardware processor 902, the main memory 904, the static memory 906, or the storage device 916 may constitute machine-readable media.

Specific examples of machine-readable media may include non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine-readable medium 922 is illustrated as a single medium, the term "machine-readable medium" may include a single medium or multiple media (e.g., a centralized or distributed database and/or associated caches and servers) configured to store instructions 924.

An apparatus of machine 900 may be one or more of a hardware processor 902 (e.g., a central processing unit (CPU), a graphics processing unit (GPU), a hardware processor core, or any combination thereof), a main memory 904 and a static memory 906, one or more sensors 921, a network interface device 920, one or more antennas 960, a display device 910, an input device 912, a UI navigation device 914, a storage device 916, instructions 924, a signal generation device 918, and an output controller 928. The apparatus may be configured to perform one or more of the methods and/or operations disclosed herein. The apparatus may be intended as a component of machine 900 to perform one or more of the methods and/or operations disclosed herein and/or to perform a portion of one or more of the methods and/or operations disclosed herein. In some embodiments, the apparatus may include a pin or other means to receive power. In some embodiments, the apparatus may include power conditioning hardware.

The term "machine-readable medium" may include any medium that is capable of storing, encoding, or carrying instructions for execution by machine 900 and that causes machine 900 to perform any one or more of the techniques of the present disclosure or that is capable of storing, encoding, or carrying data structures used by or associated with such instructions. Non-limiting machine-readable medium examples may include solid-state memories and optical and magnetic media. Specific examples of machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine-readable media may include non-transitory machine-readable media. In some examples, machine-readable media may include machine-readable media that is not a transitory propagating signal.

The instructions 924 may further be transmitted or received over a communications network 926 using a transmission medium via the network interface device 920 utilizing any one of several transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, a Long Term Evolution (LTE) family of standards, a Universal Mobile Telecommunications System (UMTS) family of standards, peer-to-peer (P2P) networks, among others.

In an example, the network interface device 920 may include one or more physical jacks (e.g., Ethernet, coaxial, or phone jacks) or one or more antennas to connect to the communications network 926. In an example, the network interface device 920 may include one or more antennas 960 to wirelessly communicate using at least one single-input multiple-output (SIMO), multiple-input multiple-output (MIMO), or multiple-input single-output (MISO) techniques. In some examples, the network interface device 920 may wirelessly communicate using multiple-user MIMO techniques. The term "transmission medium" shall be taken to include any intangible medium that can store, encode, or carry instructions for execution by machine 900, including digital or analog communications signals or other intangible media to facilitate communication of such software.

Examples, as described herein, may include, or may operate on, logic or several components, modules, or mechanisms. Modules are tangible entities (e.g., hardware) capable of performing specified operations and may be configured or arranged in a particular manner. In an example, circuits may be arranged (e.g., internally or concerning external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part, all, or any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at separate times. The software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable the performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read-only memory (ROM), random access memory (RAM), magnetic disk storage media, optical storage media, flash memory, etc.

In several aspects, the methods, design, and circuitry described are used in Coherent Optical Transceivers built for satellites to enable inter-satellite optical links with high data rates of 100Gbps or beyond.

In some aspects, inter-satellite optical links refer to optical communication links between two satellites within the low Earth orbit (LEO) or between a LEO satellite and a geostationary Earth orbit (GEO) satellite. Satellites may convey their ephemeris information to other satellites through suitable control interfaces. Ephemeris information may be in Two Line Elements (TLE) format with 5 parameters denoting the orbital plane parameters and 2 parameters denoting the satellite level parameters.

A Coherent optical transceiver may consist of photonics circuitry, data converters, baseband DSP circuitry, FEC encoder, and decoder, and a serial interface. Photonics circuitry is used to convert an electrical signal to an optical signal at the transmitter and an optical signal to an electrical signal at the receiver. Photonics circuitry may further include a laser source both at the transmitter and the receiver. In coherent optical transceivers, the received optical signal is mixed with a local laser source to decode the signal, which enables both amplitude and phase modulation as well as polarization multiplexing. Data converter circuitry involves a Digital-to-Analog (DAC) converter at the transmitter and an Analog-to-Digital (ADC) converter at the receiver with appropriate sampling rates. Baseband DSP circuitry is used to modulate a signal at the transmitter and demodulate the signal at the receiver based on the waveform, standard, and baud rates. Forward error correction (FEC) encoder at the transmitter and FEC decoder at the receiver help add redundancy to decode a bit stream reliably. A serial bit interface is used to format, send, or receive the bit stream at the transmitter and the receiver, respectively.

Photonics circuitry may use Mach-Zehnder modulators (MZM) at the transmitter to optically modulate the amplitude and phase based on the modulation scheme. At the transmitter, the photonics circuitry may send the signal either over a single-mode fiber (SMF) or a polarization-maintaining fiber (PMF) to the optical aperture, which transmits the laser signal over a free space channel. Photonics circuitry may use an Optical front-end with structures called Hybrid 90 at the receiver to mix the received optical signal with a local laser source and generate 4 streams of signals corresponding to the in-phase and quadrature components for the two polarizations. These 4 signals may then be fed to balanced photodiodes for photodetection and amplified further by a Trans-Impedance Amplifier (TIA). ADC circuitry may then convert the analog signal to digital for baseband processing.

The laser source may be tunable in the C-band wavelength range of 1530-1565nm, corresponding to the frequency range of roughly 191-196 THz.

Baseband DSP circuitry may support waveforms according to various optical standards such as i) OpenZR+ standard used in fiber optic systems with dual polarization and modulation schemes such as QPSK, 8QAM, and 16QAM, ii) Digital Video Broadcasting standard DVB-S2 with several modulation schemes, iii) NASA developed a standard for Lunar Communication Relay Demonstration (LCRD) employing a custom Differential PSK (DPSK) waveform with DVB-S2 FEC, iv) Space Development Agency (SDA) standard with OOK based modulation schemes.

The term "optical system," as used herein, includes, for example, a device capable of optical communication by modulating a signal using a laser source or visible light, involving transmission of optical pulses, and may include coherent or direct detection, incorporating photon counting methods or baseband circuitry for signal processing.

The above-detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, examples that include the elements shown or described are also contemplated. Moreover, also contemplated are examples using any combination or permutation of those elements shown or described (or one or more aspects thereof), either with respect to a particular example (or one or more aspects thereof) or with respect to other examples (or one or more aspects thereof) shown or described herein.

Publications, patents, and patent documents referred to in this document are incorporated by reference herein in their entirety, as though individually incorporated by reference. In the event of inconsistent usage between this document and those documents so incorporated by reference, the usage in the incorporated reference(s) is supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc., are used merely as labels and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in several environments, such as part of a system on chip, a set of intercommunicating functional blocks, or similar, although the scope of the disclosure is not limited in this respect.

Described implementations of the subject matter can include one or more features, alone or in combination, as illustrated below by way of examples.

Example 1 is an adaptive equalization and phase recovery circuit comprising a weight adaptation circuit to decode phase estimation information generated during a carrier phase recovery for an input digital signal, generate a plurality of weights based on the phase estimation information, and perform weight adaptation to modify at least one of the plurality of weights based on a polarization of the input digital signal to obtain a modified plurality of weights; a filtering circuit to: apply the modified plurality of weights to the input digital signal to generate an equalized digital signal; and the weight adaptation circuit and the filter circuit being reconfigurable for a plurality of communication standards and waveforms.

In Example 2, the subject matter of Example 1 includes subject matter where the input digital signal is based on a single polarization waveform, and wherein to perform the weight adaptation, the weight adaptation circuit is to configure one or more of two rows and two columns in a weight matrix of the modified plurality of weights to include fixed zero values.

In Example 3, the subject matter of Examples 1-2 includes subject matter where the weight adaptation circuit is to detect the input digital signal is based on a burst mode waveform and perform gating based on detecting the burst mode waveform, the gating including activating and deactivating the adaptive equalization circuit for a pre-configured number of clock cycles.

In Example 4, the subject matter of Examples 1-3 includes subject matter where the weight adaptation circuit is to detect a baud rate and a waveform associated with the input digital signal and subsample the input digital signal to obtain a subsampled signal, based on the baud rate and the waveform. The filtering circuit is to apply the modified plurality of weights to the subsampled signal to generate the equalized digital signal.

In Example 5, the subject matter of Examples 1-4 includes an initialization and reset circuit to detect a singularity issue associated with the adaptive equalization circuit and enforce a unitary matrix constraint associated with the weight adaptation based on detecting the singularity issue, wherein the unitary matrix constraint is enforced based on modifying at least one off-diagonal element of a Jones matrix used during the weight adaptation.

In Example 6, the subject matter of Example 5 includes subject matter where the initialization and reset circuit is to generate the Jones matrix based on prior center taps from a weight matrix generated by the weight adaptation circuit in a previous processing cycle, and wherein generating the Jones matrix includes a digital quarter wave plate to modify basis vectors from linear to circular polarization or vice versa.

In Example 7, the subject matter of Examples 1-6 includes a convergence and divergence detector circuit, the convergence and divergence detector circuit to accumulate error metric over a programmable window; switch the weight adaptation circuit from a Constant Modulus Algorithm (CMA) mode of operation to a Least Mean Squares (LMS) mode of operation when the accumulated error metric is below a certain threshold; and switch the weight adaptation circuit from the LMS mode of operation to the CMA mode of operation when the accumulated error metric is above a threshold.

In Example 8, the subject matter of Examples 1-7 includes a phase recovery circuit to perform a two-stage carrier phase recovery to generate phase noise estimate from the input digital signal, wherein the two-stage carrier phase recovery comprises: a first stage based on a low latency feedback decision directed algorithm with a simple mean-based filtering integrated with adaptive equalization; and a second stage based on feed-forward Viterbi Mth power algorithm with phase unwrapping and Maximum Likelihood filtering with multiplier-free shift and add circuits.

In Example 9, the subject matter of Example 8 includes subject matter where one of the first stage or the second stage of the two-stage carrier phase recovery is deactivated to enable a single-stage carrier phase recovery and wherein the phase recovery circuit is to perform carrier phase recovery for Differential Phase Shift Keying (DPSK), On-Off Keying (OOK), and Pulse Position Modulation (PPM) schemes with single or dual polarization waveforms, using one stage of a feed-forward Viterbi Mth power algorithm.

Example 10 is a receiver comprising a carrier phase recovery circuit to generate phase estimation information for an input digital signal corresponding to a received signal and adaptive equalization circuit coupled to the carrier phase recovery circuit, the adaptive equalization circuit comprising a weight adaptation circuit to obtain the phase estimation information from the carrier phase recovery circuit; generate a plurality of weights based on the phase estimation information; and perform weight adaptation to modify at least one of the plurality of weights based on a polarization of the input digital signal to generate a modified plurality of weights; and a filtering circuit to: apply the modified plurality of weights to the input digital signal to generate an equalized digital signal.

In Example 11, the subject matter of Example 10 includes subject matter where the input digital signal is based on a single polarization waveform, and wherein to perform the weight adaptation, the weight adaptation circuit is to configure one or both of at least two rows and at least two columns in a weight matrix of the modified plurality of weights to include fixed zero values.

In Example 12, the subject matter of Examples 10-11 includes subject matter where the weight adaptation circuit is to detect the input digital signal is based on a burst mode waveform and perform gating based on detecting the burst mode waveform, the gating including activating and deactivating the adaptive equalization circuit for a pre-configured number of clock cycles.

In Example 13, the subject matter of Examples 10-12 includes subject matter where the receiver comprises an adaptive equalization and phase recovery circuit, including the weight adaptation circuit and the filtering circuit, the adaptive equalization and phase recovery circuit is to generate a Jones matrix based on prior center taps from a weight matrix generated by the weight adaptation circuit in a previous processing cycle; wherein generating the Jones matrix includes a digital quarter wave plate to modify basis vectors from linear to circular polarization or vice versa; and use the generated Jones matrix to perform polarization decoupling or pre-orthogonalization of a dual polarization signal before Doppler tracking or clock data recovery.

In Example 14, the subject matter of Example 13 includes subject matter where the weight adaptation circuit is to detect a baud rate and a waveform associated with the input digital signal and subsample the input digital signal to obtain a subsampled signal based on the baud rate and the waveform; and the filtering circuit to apply the modified plurality of weights to the subsampled signal to generate the equalized digital signal.

In Example 15, the subject matter of Examples 13-14 includes subject matter where the adaptive equalization circuit further comprises an initialization circuit to detect a singularity issue associated with the adaptive equalization circuit and enforce a unitary matrix constraint associated with the weight adaptation based on detecting the singularity issue, wherein the unitary matrix constraint is enforced by modifying at least one off-diagonal element of a Jones matrix used during the weight adaptation.

In Example 16, the subject matter of Examples 13-15 includes subject matter where the carrier phase recovery circuit is to perform a two-stage carrier phase recovery to generate a phase noise estimate from the input digital signal, the two-stage carrier phase recovery including a first stage based on a low latency feedback decision directed algorithm with a simple mean-based filtering integrated with adaptive equalization; and a second stage based on feed-forward Viterbi Mth power algorithm with phase unwrapping and Maximum Likelihood filtering with multiplier-free shift and add circuits.

In Example 17, the subject matter of Example 16 includes subject matter where one of the two stages of carrier phase recovery is deactivated to enable a single-stage carrier phase recovery, and the two-stage carrier phase recovery is to perform carrier phase recovery for Differential Phase Shift Keying (DPSK), On-Off keying (OOK), and Pulse Position Modulation (PPM) schemes with single or dual polarization waveforms, using one stage of a feed-forward Viterbi Mth power algorithm.

Example 18 is a method for signal equalization, the method comprising generating phase estimation information for an input digital signal corresponding to a received signal, generating a plurality of weights based on the phase estimation information, performing weight adaptation to modify at least one of the plurality of weights based on a polarization of the input digital signal to generate a modified plurality of weights; and applying the modified plurality of weights to the input digital signal to generate an equalized digital signal.

In Example 19, the subject matter of Example 18 includes subject matter where the input digital signal is based on a single polarization waveform, and the method further comprises configuring at least two rows in a weight matrix of the modified plurality of weights to include fixed zero values; and configuring at least two columns in the weight matrix of the modified plurality of weights to include the fixed zero values.

In Example 20, the subject matter of Examples 18-19 includes detecting the input digital signal is based on a burst mode waveform and performing gating based on detecting the burst mode waveform, the gating includes activating and deactivating the weight adaptation for a pre-configured number of clock cycles.

Example 21 is at least one machine-readable medium including instructions that, when executed by processing circuitry, cause the processing circuitry to perform operations to implement any of Examples 1-20.

Example 22 is an apparatus comprising means to implement any of Examples 1-20.

Example 23 is a system to implement any of Examples 1-20.

Example 24 is a method to implement any of Examples 1-20.

The above description is intended to be illustrative and not restrictive. For example, the above-described examples (or one or more aspects thereof) may be used in combination with others. Other embodiments may be used, such as by one of ordinary skill in the art upon reviewing the above description. The abstract is to allow the reader to ascertain the nature of the technical disclosure quickly. It is submitted with the understanding that it will not be used to interpret or limit the scope or meaning of the claims. Also, in the above Detailed Description, various features may be grouped to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined regarding the appended claims, along with the full scope of equivalents to which such claims are entitled.

**Claims**

1. An adaptive equalization and phase recovery circuit comprising:

a weight adaptation circuit to:

decode phase estimation information generated during a carrier phase recovery for an input digital signal;
generate a plurality of weights based on the phase estimation information; and
perform weight adaptation to modify at least one of the plurality of weights based on a polarization of the input digital signal to obtain a modified plurality of weights;

a filtering circuit to:

apply the modified plurality of weights to the input digital signal to generate an equalized digital signal; and
the weight adaptation circuit and the filter circuit being reconfigurable for a plurality of communication standards and waveforms.

2. The adaptive equalization and phase recovery circuit of claim 1, wherein the input digital signal is based on a single polarization waveform, and wherein to perform the weight adaptation, the weight adaptation circuit is to:
configure one or more of two rows and two columns in a weight matrix of the modified plurality of weights to include fixed zero values.

3. The adaptive equalization and phase recovery circuit of any one of claims 1-2, wherein the weight adaptation circuit is to:

detect the input digital signal is based on a burst mode waveform; and
perform gating based on detecting the burst mode waveform, the gating including activating and deactivating the adaptive equalization circuit for a pre-configured number of clock cycles.

4. The adaptive equalization and phase recovery circuit of any one of claims 1-3, wherein:

the weight adaptation circuit is to detect a baud rate and a waveform associated with the input digital signal, and subsample the input digital signal to obtain a subsampled signal, based on the baud rate and the waveform; and
the filtering circuit is to apply the modified plurality of weights to the subsampled signal to generate the equalized digital signal.

5. The adaptive equalization and phase recovery circuit of any one of claims 1-4, further comprising:

an initialization and reset circuit to:

detect a singularity issue associated with the adaptive equalization circuit; and
enforce a unitary matrix constraint associated with the weight adaptation based on detecting the singularity issue,

wherein the unitary matrix constraint is enforced based on modifying at least one off-diagonal element of a Jones matrix used during the weight adaptation.

6. The adaptive equalization and phase recovery circuit of claim 5, wherein the initialization and reset circuit is to:
generate the Jones matrix based on prior center taps from a weight matrix generated by the weight adaptation circuit in a previous processing cycle, and wherein generating the Jones matrix includes a digital quarter wave plate to modify basis vectors from linear to circular polarization or vice versa.

7. A receiver comprising:
a carrier phase recovery circuit to:

generate phase estimation information for an input digital signal corresponding to a received signal; and
adaptive equalization circuit coupled to the carrier phase recovery circuit, the adaptive equalization circuit comprising:

a weight adaptation circuit to:

obtain the phase estimation information from the carrier phase recovery circuit;
generate a plurality of weights based on the phase estimation information; and
perform weight adaptation to modify at least one of the plurality of weights based on a polarization of the input digital signal to generate a modified plurality of weights; and

a filtering circuit to:

apply the modified plurality of weights to the input digital signal to generate an equalized digital signal.

8. The receiver of claim 7, wherein the input digital signal is based on a single polarization waveform, and wherein to perform the weight adaptation, the weight adaptation circuit is to:
configure one or both of at least two rows and at least two columns in a weight matrix of the modified plurality of weights to include fixed zero values.

9. The receiver of any one of claims 7-8, wherein the weight adaptation circuit is to:

detect the input digital signal is based on a burst mode waveform; and
perform gating based on detecting the burst mode waveform, the gating including activating and deactivating the adaptive equalization circuit for a pre-configured number of clock cycles.

10. The receiver of any one of claims 7-9, wherein the receiver comprises an adaptive equalization and phase recovery circuit including the weight adaptation circuit and the filtering circuit, the adaptive equalization and phase recovery circuit is to:

generate a Jones matrix based on prior center taps from a weight matrix generated by the weight adaptation circuit in a previous processing cycle;
wherein generating the Jones matrix includes a digital quarter wave plate to modify basis vectors from linear to circular polarization or vice versa; and
use the generated Jones matrix to perform polarization decoupling or pre-orthogonalization of a dual polarization signal before Doppler tracking or clock data recovery.

11. The receiver of claim 10, wherein:

the weight adaptation circuit is to detect a baud rate and a waveform associated with the input digital signal, and subsample the input digital signal to obtain a subsampled signal, based on the baud rate and the waveform; and
the filtering circuit to apply the modified plurality of weights to the subsampled signal to generate the equalized digital signal.

12. The receiver of any one of claims 10-11, wherein the adaptive equalization circuit further comprises:
an initialization circuit to:

detect a singularity issue associated with the adaptive equalization circuit; and
enforce a unitary matrix constraint associated with the weight adaptation based on detecting the singularity issue, wherein the unitary matrix constraint is enforced by modifying at least one off-diagonal element of a Jones matrix used during the weight adaptation.

13. A method for signal equalization, the method comprising:

generating phase estimation information for an input digital signal corresponding to a received signal;
generating a plurality of weights based on the phase estimation information;
performing weight adaptation to modify at least one of the plurality of weights based on a polarization of the input digital signal to generate a modified plurality of weights; and
applying the modified plurality of weights to the input digital signal to generate an equalized digital signal.

14. The method of claim 13, wherein the input digital signal is based on a single polarization waveform, and the method further comprising:

configuring at least two rows in a weight matrix of the modified plurality of weights to include fixed zero values; and
configuring at least two columns in the weight matrix of the modified plurality of weights to include the fixed zero values.

15. The method of any one of claims 13-14, further comprising:
detecting the input digital signal is based on a burst mode waveform; and performing gating based on detecting the burst mode waveform, the gating including activating and deactivating the weight adaptation for a pre-configured number of clock cycles.

**FIG. 1**

FIG. 2

FIG. 3

**FIG. 4**

EP 4 633 062 A1

**FIG. 5**

EP 4 633 062 A1

**FIG. 6**

EP 4 633 062 A1

**FIG. 7**

EP 4 633 062 A1

800

GENERATE PHASE ESTIMATION INFORMATION FOR AN INPUT DIGITAL SIGNAL CORRESPONDING TO A RECEIVED SIGNAL — 802

GENERATE A PLURALITY OF WEIGHTS BASED ON THE PHASE ESTIMATION INFORMATION — 804

PERFORM WEIGHT ADAPTATION TO MODIFY AT LEAST ONE OF THE PLURALITY OF WEIGHTS BASED ON A POLARIZATION OF THE INPUT DIGITAL SIGNAL TO GENERATE A MODIFIED PLURALITY OF WEIGHTS — 806

APPLY THE MODIFIED PLURALITY OF WEIGHTS TO THE INPUT DIGITAL SIGNAL TO GENERATE AN EQUALIZED DIGITAL SIGNAL — 808

**FIG. 8**

_900_

_908_

_902_

PROCESSOR

_924_

INSTRUCTIONS

_904_

MAIN MEMORY

_924_

INSTRUCTIONS

_906_

STATIC MEMORY

_924_

INSTRUCTIONS

_921_

SENSORS

_920_

NETWORK INTERFACE
DEVICE

_960_

ANTENNA(S)

_926_

NETWORK

INTERCONNECT

_910_

DISPLAY DEVICE

_912_

INPUT DEVICE

_914_

UI NAVIGATION DEVICE

_916_

STORAGE DEVICE

_922_

MACHINE-
READABLE MEDIUM

_924_

INSTRUCTIONS

_918_

SIGNAL GENERATION
DEVICE

_928_

OUTPUT CONTROLLER

**FIG. 9**

Europäisches
Patentamt
European
Patent Office
Office européen
des brevets

# EUROPEAN SEARCH REPORT

**Application Number**

EP 25 16 5760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 863 297 B1 (ZHANG JUNWEN [US] ET AL) 2 January 2024 (2024-01-02) <br> * column 22, line 56 - column 23, line 41; figures 2,4,15 * <br> * column 22, line 45 - line 66 * <br> * figure 26 * | 1-4,7-9, 13-15 | INV. <br> H04B10/118 <br> H04B10/61 |
| X | EP 3 316 498 A1 (HUAWEI TECH CO LTD [CN]) 2 May 2018 (2018-05-02) <br> * figure 2 * | 1,7,13 | |
| X | YI PIN ET AL: "Experimental Investigation on Low-Complexity Adaptive Equalizer Including RSOP Tracking and Phase Recovery for 112 Gb/s PDM-QPSK Transmission System", <br> IEEE PHOTONICS JOURNAL, IEEE, USA, <br> vol. 13, no. 2, 1 March 2021 (2021-03-01), pages 1-15, XP011844852, <br> DOI: 10.1109/JPHOT.2021.3062727 <br> [retrieved on 2021-03-18] <br> * part Principle; figure 2 * | 1,5-7, 10-13 | |
| X | US 2015/263813 A1 (GORSHTEIN ALBERT [IL] ET AL) 17 September 2015 (2015-09-17) <br> * figure 2b * | 1,7,13 | |

**TECHNICAL FIELDS SEARCHED (IPC)**

H04B

The present search report has been drawn up for all claims

| Place of search | Date of completion of the search | Examiner |
|---|---|---|
| Munich | 14 August 2025 | Borsier, Celine |

EPO FORM 1503 03.82 (P04C01)

## ANNEX TO THE EUROPEAN SEARCH REPORT
## ON EUROPEAN PATENT APPLICATION NO.

EP 25 16 5760

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2025

| Patent document cited in search report | | Publication date | Patent family member(s) | | Publication date |
|---|---|---|---|---|---|
| US 11863297 | B1 | 02-01-2024 | US | 11387929 B1 | 12-07-2022 |
| | | | US | 11863297 B1 | 02-01-2024 |
| EP 3316498 | A1 | 02-05-2018 | CN | 107735964 A | 23-02-2018 |
| | | | EP | 3316498 A1 | 02-05-2018 |
| | | | US | 2018123725 A1 | 03-05-2018 |
| | | | WO | 2016205996 A1 | 29-12-2016 |
| US 2015263813 | A1 | 17-09-2015 | NONE | | |

EPO FORM P0459

For more details about this annex : see Official Journal of the European Patent Office, No. 12/82